# EUROPEAN PATENT APPLICATION

(11) **EP 4 485 672 A1**
(43) Date of publication of application: **01.01.2025**
(21) Application number: 24169002.3
(22) Date of filing: 08.04.2024
(51) Int. Cl.: H01M 50/503, H01M 50/507

(54) **BATTERY PACK**

(30) Priority: 30.06.2023 KR 20230085197
(71) Applicant: Samsung SDI Co., Ltd., Yongin-si, Gyeonggi-do 17084 (KR)
(72) Inventor: Lee, Youngjin, 17084 Yongin-si, Gyeonggi-do (KR); Yeom, Gilchoun, 17084 Yongin-si, Gyeonggi-do (KR); Kim, Jungsoo, 17084 Yongin-si, Gyeonggi-do (KR); Nam, Jinwon, 17084 Yongin-si, Gyeonggi-do (KR); Park, Myunghyun, 17084 Yongin-si, Gyeonggi-do (KR)
(74) Representative: Gulde & Partner

(57) **Abstract**

A battery pack includes a first battery module including first battery cells and a first bus bar electrically connected to the first battery cells, a second battery module including second battery cells and a second bus bar electrically connected to the second battery cells, and a conductive connector connected to the first bus bar and the second bus bar, the conductive connector having a first connection portion connected to the first bus bar, a second connection portion connected to the second bus bar, and a displacement portion between the first connection portion and the second connection portion, the displacement portion being moveable in each of X-axis, Y-axis, and Z-axis directions.

## Description

### BACKGROUND

### 1. Field

An aspect of the present disclosure relates to a battery pack.

### 2. Description of the Related Art

Generally, a secondary battery may be used as a battery module formed of a plurality of unit battery cells connected in series and/or parallel to provide high energy density (e.g., for driving a vehicle motor). That is, the battery module is formed by connecting electrode terminals of a plurality of unit batteries to each other to meet a required amount of power, e.g., to implement a high-output secondary battery for an electric vehicle.

The battery module may be configured in a block-type structure or a modular structure. In the block-type structure, each of the battery cells is connected to a common current collector structure and a common battery management system. In the modular structure, a sub-module is formed by connecting multiple battery cells, and the battery module is formed by connecting multiple sub-modules. In automotive applications, a battery system is often formed of multiple battery modules connected in series to provide a desired voltage. Herein, the battery module may include a sub-module in which a plurality of battery cells are stacked, and in the battery module, sub-modules including cells connected in parallel may be connected in series (XpYs), or submodules including cells connected in series may be connected in parallel (XsYp).

A battery pack may be a set of multiple (usually identical) battery modules configured in series, parallel, or a combination of the two to provide a desired voltage, capacity, or power density. The components of a battery pack may include individual cell modules and interconnection portions (e.g., connection bus bars) that provide electrical conductivity therebetween.

### SUMMARY

An embodiment of the present disclosure provides a battery pack including a first battery module including a plurality of first battery cells and a first bus bar electrically connected to the first battery cells, a second battery module configured to including a plurality of second battery cells and a second bus bar electrically connected to the second battery cells; and a thin plate conductive connector connected to the first bus bar and the second bus bar. The conductive connector includes a first connection portion connected to the first bus bar; a second connection portion connected to the second bus bar; and a displacement portion positioned between the first connection portion and the second connection portion and capable of XYZ axis displacement.

The displacement portion may be configured as a flexible structure including a concave portion and a convex portion that are alternately positioned.

The conductive connector may have a bar shape, and the concave portion and the convex portion may extend along a direction perpendicular to a longitudinal direction of the conductive connector. The concave portion and the convex portion may protrude to opposite directions relative to the first and second connection portions

The displacement portion may be formed as a thin metal plate in which the concave portion and the convex portion are pressed.

The conductive connector may be configured by stacking the thin metal plate in plural by compression.

A stack number of the thin metal plate may be 8 to 10, preferably 9.

A thickness of the thin metal plate may be 0.2 mm or 0.1mm.

The thin metal plate may include aluminum.

The battery pack may further include a first conductive damper connected to the first bus bar and the first connection portion, and a second conductive damper connected to the second bus bar and the second connection portion.

The first conductive damper and the second conductive damper may respectively have a first edge connected to the first bus bar and the second bus bar, and a second edge opposite to the first edge maintained as a free end.

The first conductive damper and the second conductive damper may be respectively integrated with the first bus bar and the second bus bar.

The first connection portion and the second connection portion may be respectively fixed to the first conductive damper and the second conductive damper by welding.

The displacement portion may be displaced according to displacement of the first battery module and/or the second battery module.

The battery pack may further include a frame having a space where the first battery module and the second battery module are positioned, and the conductive connector may be positioned outside the frame.

### BRIEF DESCRIPTION OF THE DRAWINGS

Features will become apparent to those of skill in the art by describing in detail exemplary embodiments with reference to the attached drawings, in which:
FIG. 1 illustrates a perspective view of a battery pack according to an embodiment.
FIG. 2 illustrates a partial perspective view of a battery pack according to an embodiment.
FIG. 3 illustrates a perspective view of a state in which a conductive connector of a battery pack is fixed to a bus bar according to an embodiment.
FIG. 4 illustrates a perspective view of a state in which a conductive connector of a battery pack is separated from a bus bar according to an embodiment.
FIG. 5A illustrates a plan view of one thin metal plate constituting a conductive connector of a battery pack according to an embodiment.
FIG. 5B illustrates a front view of the thin metal plate of FIG. 5A.
FIG. 6A illustrates a view for describing a method of forming a conductive connector of a battery pack according to an embodiment.
FIG. 6B illustrates a perspective view of a conductive connector of a battery pack according to an embodiment.
FIG. 7A to FIG. 7D illustrate views of an operating state of a conductive connector of a battery pack according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

When a component or a layer is expressed as "connected to" or "coupled to" another component or layer, it may be directly connected to another component or layer, or there may be one or more intervening components or layers between the components. For example, when a first component is described as being "coupled" or "connected" to a second component, the first component may be directly coupled or connected to the second component, or the first component may be indirectly coupled or connected to the second component through one or more intervening components.

As used in the present specification, the term "and/or" includes any and all combinations of one or more associated listed items. Additionally, the term "may/can" when describing embodiments of the present disclosure indicates "one or more embodiments of the present disclosure."

When an expression such as "at least one" precedes a list of components, it modifies the entire list of components and does not modify individual components of the list. For example, the expression "at least one of a, b, or c" includes only a, only b, only c, both a and b, both a and c, both b and c, all a, b, and c, or variations thereof. As used in the present specification, the terms "use," "using," and "used" may be considered synonymous with the terms "utilize," "utilizing," and "utilized," respectively. As used in the present specification, the terms "substantially," "about," and similar terms are used as approximations rather than degrees, and are intended to account for inherent deviations from measured or calculated values that would be appreciated by a person of ordinary skill in the art.

The terms "first," "second," "third," and the like may be used in the present specification to describe various elements, components, regions, layers and/or sections; and/or sections should not be limited by these terms. These terms are used to distinguish one element, constituent element, region, layer, or section from another element, constituent element, region, layer, or section. Accordingly, the first component may be referred to as the second component without departing from the scope of the present disclosure, and similarly, the second component may also be referred to as the first component. A single form of expression is meant to contain multiple components, unless otherwise specified.

Spatially relative terms such as "below," "above," etc. may be used to describe a relationship between one element or feature illustrated in drawings and another element or feature. It will be understood that the spatially relative terms are intended to include other directions of a device in use or operation in addition to the directions illustrated in the drawings. For example, if a device in a drawing is turned over, an element described using "below" or "beneath" another element or feature will face "above" the other element or feature. Accordingly, the example term "down" may include both up and down directions. Since a device may be oriented differently (e.g., rotated 90 degrees or otherwise), the spatially relative terms used herein should be interpreted accordingly.

The terms used in the present specification are used to describe embodiments of the present disclosure, and are not intended to limit the present disclosure. As used in the present specification, singular expressions may also include plural forms, unless the context clearly indicates otherwise. The term "comprise" or "comprising" specifies a characteristic, area, fixed number, step, process, element, component or combination thereof, but it does not exclude other characteristics, areas, fixed numbers, steps, processes, elements, components and combinations thereof.

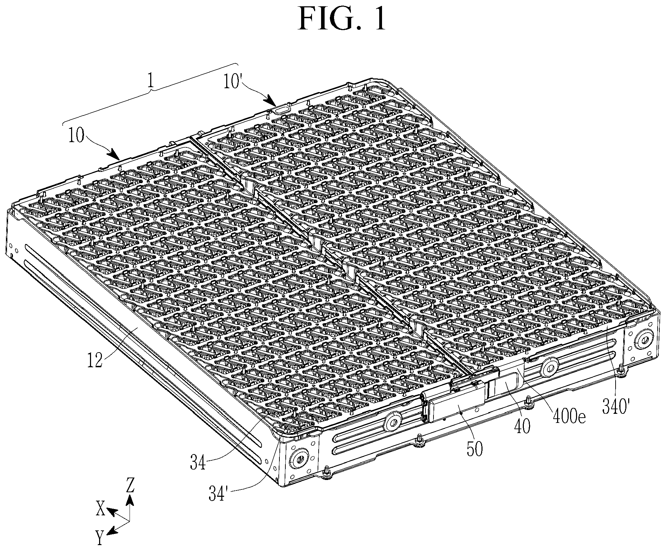

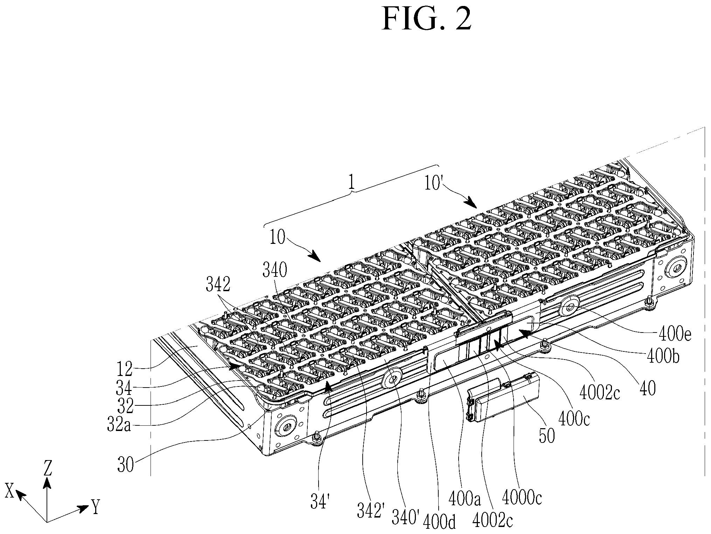

FIG. 1 illustrates a perspective view showing a battery pack according to an embodiment, and FIG. 2 illustrates a partial exploded perspective view of the battery pack of FIG. 1.

Referring to FIG. 1 and FIG. 2, a battery pack 1 may include a plurality of battery modules. For example, the battery pack 1 in FIG. 1 may include two battery modules, i.e., a first battery module 10 and a second battery module 10'. The first and second battery modules 10 and 10' may be electrically connected by a conductive connector 40, which will be described in more detail later. Herein, the conductive connector 40 may also be referred to as a module bus bar or a connection bus bar.

As illustrated in FIG. 1, the first battery module 10 (i.e., a left module according to the drawing) and the second battery module 10' (i.e., a right module according to the drawing) may be positioned side by side, e.g., along the Y-axis, in a space within a frame 12 of the battery pack 1. The frame 12 may have a substantially square outline as the first battery module 10 and the second battery module 10' each may have a substantially rectangular outline. In the present embodiment, the first battery module 10 and the second battery module 10' may have a same configuration. Accordingly, the first and second battery modules 10 and 10' are described using the first battery module 10 as an example.

In detail, the first battery module 10 may include a plurality of battery cells. In the drawing, the battery cells are not illustrated for convenience to simplify the drawing. The battery cells may be cylindrical, and may be positioned in hundreds (e.g., 416 battery cells) in a certain pattern on a lower case 30 (e.g., a cell holder) constituting a module housing. The lower case 30 may be provided with a concave portion into which each of the battery cells is inserted. Accordingly, most of outer surfaces of the battery cells positioned in the lower case 30 may be covered by the lower case 30. An upper case 32 of the module housing may be positioned at an upper side of the lower case 30. The upper case 32 is provided with openings 32a that exposes upper sides of the battery cells, i.e., a cap assembly including an electrode terminal. Herein, a pattern of the openings 32a may depend on an arrangement pattern of the battery cells.

A bus bar 34 made of a metal may be positioned on the upper case 32 to electrically connect the battery cells. The bus bar 34 may include a plurality of bus bars 34 positioned on the upper case 32, which are connected to the battery cells in series and/or parallel. The bus bar 34 may have an appropriate shape depending on a connection method with the battery cells. In the present embodiment, the bus bar 34 may include an extension 340 extending long (e.g., lengthwise) along a width direction (e.g., the Y-axis direction) of the first and second battery modules 10 and 10', and branch portions 342 each of which are inclined at a random angle with respect to the extension 340 from opposite edges of the extension 340. An outer branch portion 342' of an outermost bus bar 34' positioned at the edge of the battery modules 10 and 10' among the bus bars 34 may be positioned only at one edge of an outer extension 340'. Hereinafter, for better understanding and ease of description, the outermost bus bar 34' of the first battery module 10 may be referred to as a first bus bar, and the outermost bus bar 34' of the second battery module 10' may be referred to as a second bus bar. In another example, the first bus bar and the second bus bar may be selected as one of the bus bars other than the outermost bus bar 34'.

The first battery module 10 and the second battery module 10' may be electrically connected to each other by the above-described conductive connector 40. The conductive connector 40 is configured not only to serve as a connector to electrically connect the first battery module 10 and the second battery module 10' but also, e.g., to prevent or substantially minimize separation from a fixed state due to vibration as a result of displacement of the first and second battery modules 10 and 10'. For example, the conductive connector 40 may be implemented by a flexible material, e.g., to absorb vibrations.

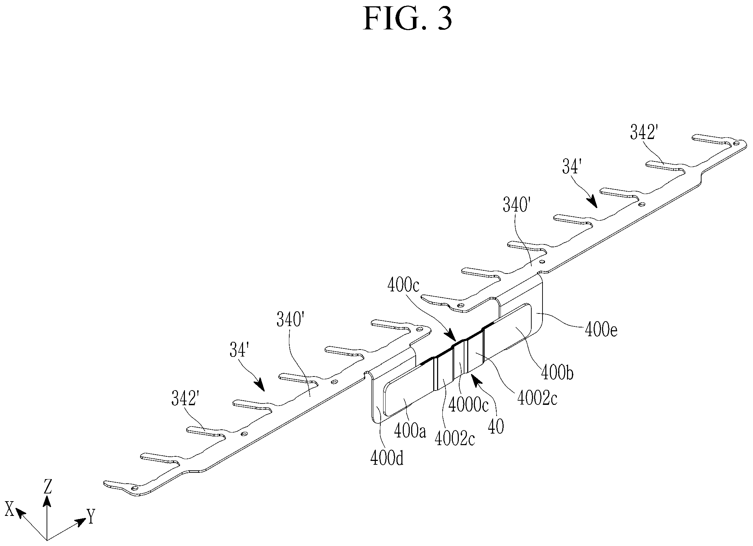

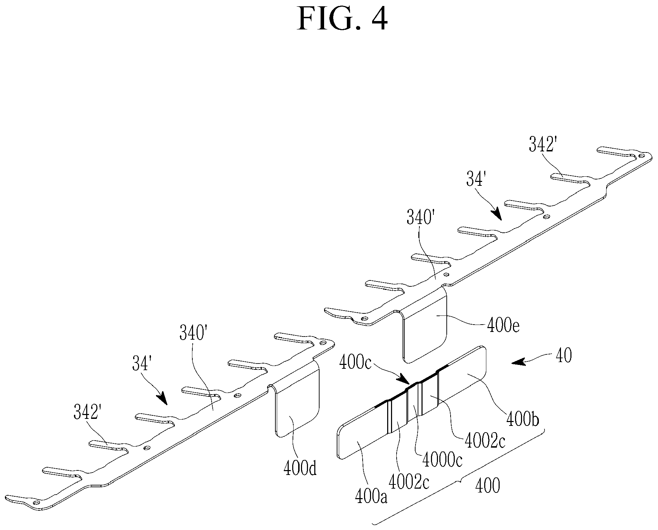

FIG. 3 illustrates a perspective view showing a state in which the conductive connector 40 is connected to the outermost bus bar 34' of each of the first and second battery modules 10 and 10' according to an embodiment. FIG. 4 illustrates a perspective view showing a state in which the conductive connector 40 is separated from the outermost bus bar 34', according to an embodiment.

Referring to FIG. 3 and FIG. 4, the conductive connector 40 may be positioned between the outermost bus bar 34' of the first battery module 10 and the outermost bus bar 34' of the second battery module 10' to be electrically connected to each of the outermost bus bar 34' of the first battery module 10 and the outermost bus bar 34' of the second battery module 10'. In implementation, the conductive connector 40 may be formed of a metal material, e.g., aluminum, and may be electrically connected to the outermost bus bar 34', which is also made of metal, by being coupled (e.g., welded) thereto.

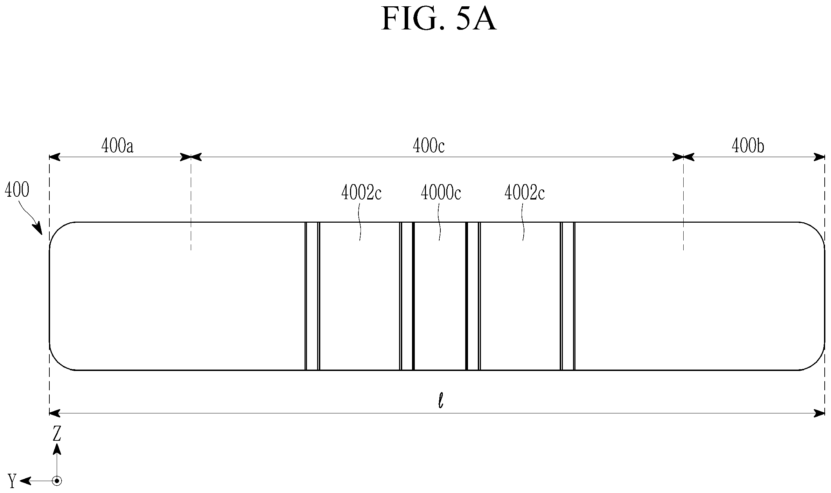

For example, the conductive connector 40 according to the present embodiment may have a straight (e.g., a linear) shape, e.g., a bar shape or a stick shape. For example, the conductive connector 40 may be formed as one thin metal plate 400 or as a structure in which a plurality of thin metal plates are stacked and pressed together, as will be incused in more detail below with reference to FIGS. 5A to 5B.

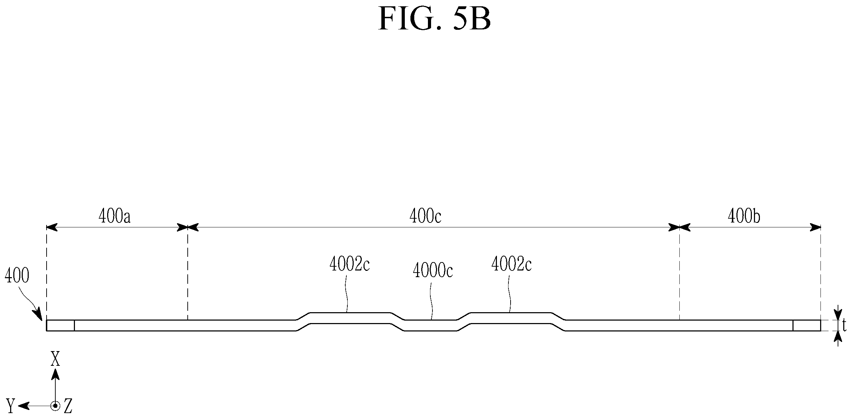

FIG. 5A and FIG. 5B respectively illustrate a top plan view and a front view of the thin metal plate 400 in the conductive connector 40. The thin metal plate 400 of the conductive connector 40 may have a bar shape with a predetermined length l, e.g., in the Y-axis direction. The thin metal plate 400 may be made of, e.g., aluminum (Al).

Referring to FIGS. 5A and 5B, the thin metal plate 400 may include a first connection portion 400a connected to the first battery module 10 and a second connection portion 400b connected to the second battery module 10'. The first and second connection portions 400a and 400b may be positioned at opposite ends of the thin metal plate 400, and the first connection portion 400a and the second connection portion 400b may have a flat shape.

A displacement portion 400c capable of XYZ axis displacement may be positioned between the first connection portion 400a and the second connection portion 400b. The displacement portion 400c may have a non-flat shape including a concave portion 4000c and a convex portion 4002c. The displacement portion 400c may have flexibility due to the concave portion 4000c and the convex portion 4002c. That is, the displacement portion is easily bent due to the concave portion 4000c and the convex portion 4002c. For example, as illustrated in FIG. 4, the displacement portion 400c may include any suitable number of alternating concave portions 4000c and convex portions 4002c between the first and second connection portions 400a and 400b. For example, the displacement portion 400c may include a concave portion 4000c and two convex portions 4002c arranged alternately in the Y-axis direction (e.g., one concave portion 4000c between two convex portions 4002c) between the first and second connection portions 400a and 400b. For example, the concave portion 4000c and the convex portion 4002c may have a shape extending (e.g., lengthwise) along the Z-axis direction perpendicular to a longitudinal direction (e.g., the Y-axis direction) of the conductive connector 40, i.e., perpendicular to a longitudinal direction of the thin metal plate 400. The concave portions 4000c and convex portions 4002c may be formed by pressing an initially flat portion (e.g., thin plate) between the first connection portion 400a and the second connection portion 400b, e.g., so the concave portion 4000c and the convex portions 4002c alternately protrude in opposite directions in the X-axis direction relative to the first and second connection portions 400a and 400b that extend in the Y-axis direction (FIG. 5B).

The first connection portion 400a and the second connection portion 400b may each have a region having a length of approximately 1/4 of a total length l of the thin metal plate 400 (e.g., in the Y-axis direction), and the displacement portion 400c may have a region having a length of approximately 1/2 of the total length l of the thin metal plate 400 (e.g., in the Y-axis direction). A thickness t (e.g., in the X-axis direction) of the thin metal plate 400 may be 0.2 mm, e.g., the thickness of the concave portions 4000c, the convex portions 4002c, the first connection portion 400a, and the second connection portion 400b in the X-axis direction may be constant. The thickness of the thin metal plate 400 may be adjusted to a thickness capable of maximizing the flexibility of the displacement portion 400c.

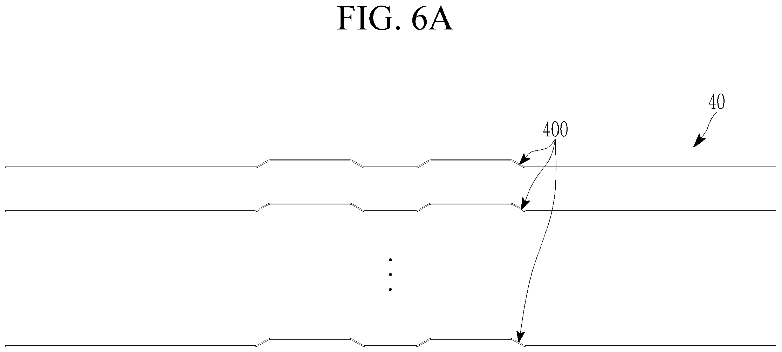

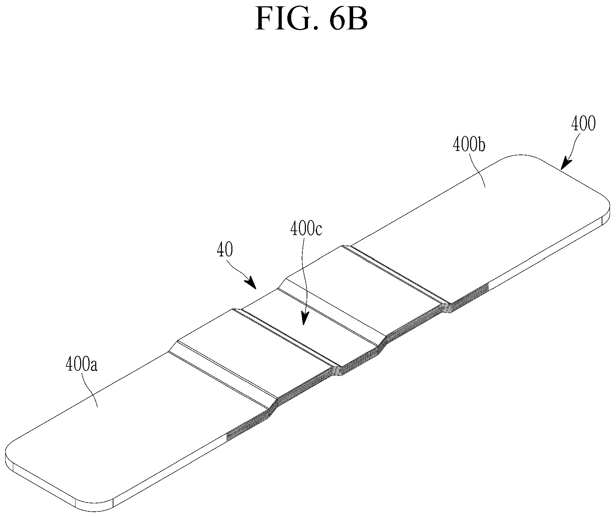

FIG. 6A illustrates a view for describing a method of forming the conductive connector 40. FIG. 6B illustrates a perspective view of the conductive connector 40.

As illustrated in FIG. 6A, the thin metal plate 400 of such a configuration may be stacked in plural pieces. A plurality of thin metal plates 400 may be stacked and then compressed (e.g., thermally compressed) to form the conductive connector 40, as illustrated in FIG. 6B. Herein, as further illustrated in FIG. 6B, the compressed portions of the thin metal plates 400 are the first connection portion 400a and the second connection portion 400b, and the displacement portion 400c may be maintained only in a stacked state without being compressed. For example, a number of stacked thin metal plates 400 may be maintained within the range of at eight (8) to ten (10). The number of stacked thin metal plates 400 may be adjusted considering the characteristics (e.g., current) of the conductive connector 40.

Referring to FIG. 3, the conductive connector 40 is positioned between the outermost bus bars 34' of the first and second battery modules 10 and 10'. In detail, the outermost bus bars 34' of the first and second battery modules 10 and 10' may include first and second conductive dampers 400d and 400e, respectively, and the conductive connector 40 may be electrically and physically connecting the first and second conductive dampers 400d and 400e to each other. For example, as illustrated in FIG. 3, the first connection portion 400a may be connected to, e.g., overlapping and in surface contact with, the first conductive damper 400d, and the second connection portion 400b may be connected to, e.g., overlapping and in surface contact with, the second conductive damper 400e.

The first conductive damper 400d and the second conductive damper 400e may have a flat, approximately quadrangular shape with a larger area than that of the first connection portion 400a and the second connection portion 400b of the conductive connector 40, respectively. For example, as illustrated in FIG. 3, the first conductive damper 400d and the second conductive damper 400e may be parallel to the first connection portion 400a and the second connection portion 400b. Additionally, the first conductive damper 400d and the second conductive damper 400e are connected to the first bus bar 34' and the second bus bar 34', respectively.

In the present embodiment, the first conductive damper 400d is formed integrally (e.g., seamlessly of a same material as a single unit) with the first bus bar 34' such that a first edge thereof is connected to the extension 340' of the first bus bar 34' and a second edge thereof opposite to the first edge is a free end. Similarly, the second conductive damper 400e is formed integrally (e.g., seamlessly of a same material as a single unit) with the second bus bar 34' such that a first edge thereof is connected to the extension 340' of the second bus bar 34' and a second edge thereof opposite to the first edge is a free end. Connections between the first conductive damper 400d and the first connection portion 400a and between the second conductive damper 400e and the second connection portion 400b may be performed through welding (e.g., ultrasonic welding).

As illustrated in FIG. 1, the conductive connector 40 may be arranged to be positioned outside the frame 12 when manufacturing the battery pack 1. For example, as described above, this arrangement may be performed by connecting the conductive connector 40 to the first bus bar 34' and the second bus bar 34' by welding it to the first bus bar 34' and the second bus bar 34', and then by positioning the first bus bar 34' and the second bus bar 34' at assembly positions within each of the first and second battery modules 10 and 10' inside the frame 12, and by positioning the conductive connector 40 outside of the frame 12. In another example, it may be performed by first positioning the first bus bar 34' and the second bus bar 34' at assembly positions within the respective battery modules 10 and 10' inside the frame 12, and then by connecting the first and second connection portions 400a and 400b of the conductive connector 40 to the first and second conductive dampers 400d and 400e of the conductive connector 40 positioned outside of the frame 12 by welding.

Meanwhile, as illustrated in FIG. 1 and FIG. 2, a cover 50 that can cover and protect the conductive connector 40 may be removably installed on the frame 12. For example, the cover 50 may protect the conductive connector 40 from external impacts.

In detail, the battery pack 1 configured in this way may be installed in a device that requires an energy source, e.g., an electric vehicle, to provide a driving source for driving a motor of the electric vehicle. The battery pack 1 may be subject to an impact depending on a condition of the vehicle, and in this case, in the battery pack 1, it is required to ensure that the conductive connector 40 connecting the battery cells or battery modules 10 and 10' is not damaged by the impact to the battery pack 1.

In the battery pack 1 according to an embodiment, even if displacement occurs in the first and second battery modules 10 and 10', e.g., due to vibration, a connection state between the first and second battery modules 10 and 10' may not be affected due to the conductive connector 40. That is, the displacement portion 400c of the conductive connector 40 may absorb vibration and/or displacement due to its flexibility and structure, e.g., concave/convex portions and stack of plates.

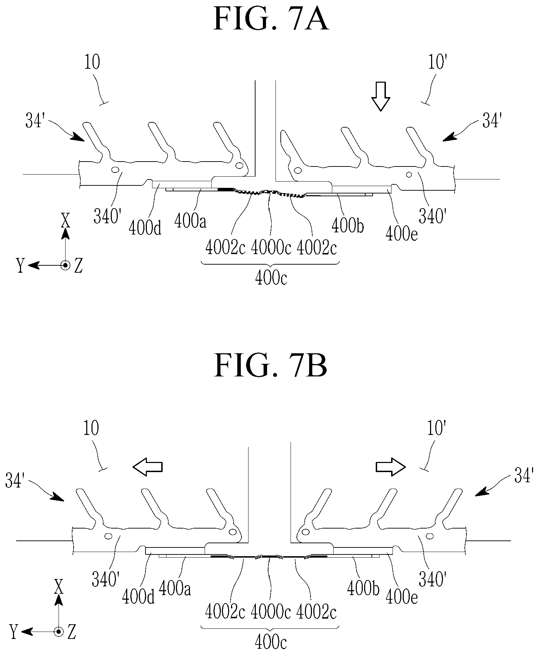

FIG. 7A to FIG. 7D each illustrate a schematic view for describing an operating state of the conductive connector 40 of the battery pack 1 according to an embodiment.

As described above, the conductive connector 40 is configured to enable XYZ axis displacement, e.g., the displacement portion 400c of the conductive connector 40 may be moveable in each of the X-axis, Y-axis, and Z-axis directions. The XYZ axis displacement of the conductive connector 40 may be linked to XYZ axis displacement of the first battery module 10 and/or the second battery module 10'.

For example, as illustrated in FIG. 7A, even if the second battery module 10' is displaced in the X-axis direction (along the illustrated arrow), the displacement portion 400c, including the convex portion 4002c and the concave portion 4000c, may absorb vibration resulting from displacement of the second battery module 10' while moving elastically in the X-axis direction (e.g., the right convex portion 4002c in FIG. 7A moves in the X-axis direction to absorb movement of the second battery module 10' while maintain electrical connection). Furthermore, vibration due to the displacement of the second battery module 10' may be further absorbed through the second conductive damper 400e of the conductive connector 40. Accordingly, the conductive connector 40 may continuously maintain an electrical function for the first battery module 10 and the second battery module 10' without self-damage or deterioration of the connection state with the first and second battery modules 10 and 10'.

In FIG. 7A, a case where the second battery module 10' is displaced is illustrated. However, even if only the first battery module 10 or both the first battery module 10 and the second battery module 10' are displaced, the conductive connector 40 may cover the displacement of the battery modules 10 and 10' while being displaced in the X-axis direction.

FIG. 7B illustrates a case where the first and second battery modules 10 and 10' are displaced in the Y-axis direction. As illustrated in FIG. 7B, if the first and second battery modules 10 and 10' are displaced in opposite directions away from each other (i.e., respective positive and negative Y-axis directions), the displacement portion 400c of the conductive connector 40, i.e., the convex portion 4002c and the concave portion 4000c, may absorb vibration caused by displacement of the first and second battery modules 10 and 10' while moving in the +Y and -Y axis directions, respectively. Even in this case, vibration due to displacement of the first and second battery modules 10 and 10' may be additionally absorbed through the first and second conductive dampers 400d and 400e of the conductive connector 40. Accordingly, the conductive connector 40 may continuously maintain an electrical function for the first battery module 10 and the second battery module 10' without self-damage or deterioration of the connection state with the first and second battery modules 10 and 10'.

In FIG. 7B, a case where both the first battery module 10 and the second battery module 10' are displaced is illustrated. However, even if only one of the first and second battery modules 10 and 10' on either side is displaced, the conductive connector 40 may cover the corresponding displacement of the battery modules 10 and 10' by being displaced in the Y-axis direction.

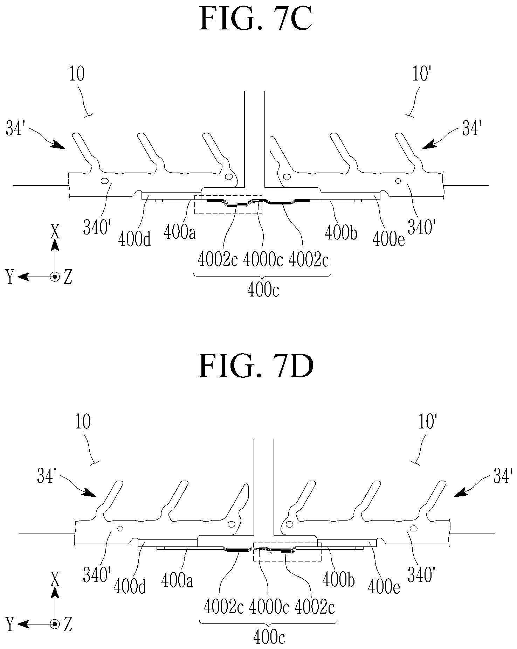

FIG. 7C and FIG. 7D illustrate a case where the first and second battery modules 10 and 10' are displaced in the Z-axis direction. FIG. 7C illustrates a case where the first battery module 10 is displaced to descend in the Z-axis direction, and FIG. 7D illustrates a case where the second battery module 10' is displaced to descend in the Z-axis direction. In each case, the conductive connector 40 may absorb vibration caused by the displacement while being linked to the displacement of the first and second battery modules 10 and 10'.

In detail, if the first battery module 10 is displaced in the Z-axis direction, the conductive connector 40 may absorb vibration resulting from displacement of the first battery module 10 as the convex portion 4002c and the concave portion 4000c at a first side (left side in FIG. 7C) of the displacement portion 400c of the conductive connector 40 are spread out in a fan shape (see a dashed box in FIG. 7C). In addition, if the second battery module 10' is displaced in the Z-axis direction, the conductive connector 40 may absorb vibration resulting from displacement of the second battery module 10' as the convex portion 4002c and the concave portion 4000c at a second side (right side in FIG. 7D) of the displacement portion 400c of the conductive connector 40 are spread out in a fan shape (see a dashed box in FIG. 7D).

The vibration due to displacement of the first and second battery modules 10 and 10' may be additionally absorbed through the first and second conductive dampers 400d and 400e of the conductive connector 40. Accordingly, the conductive connector 40 may continuously maintain an electrical connection and function for the first battery module 10 and the second battery module 10' without self-damage or deterioration of the connection state with the first and second battery modules 10 and 10'.

FIG. 7C and FIG. 7D illustrate the case where one of the first and second battery modules 10 and 10' is displaced in the Z-axis direction. However, even if both of the first and second battery modules 10 and 10' are displaced in the Z-axis direction, the conductive connector 40 according to an embodiment is capable of absorbing the displacement of the battery modules 10 and 10'.

In addition, the conductive connector 40 according to an embodiment may absorb vibration while being displaced in response to displacement in each direction even if the first and second battery modules 10 and 10' are displaced in at least two directions in the XYZ axis direction.

Table 1 below shows direct current internal resistance (DCIR) and strength measured by varying a stack number of the thin metal plates 400 constituting the conductive connector 40. It can be seen in Table 1 that when the stack number of thin metal plates 400 was 10, the DICR was maintained in a desired range and a strength characteristic was maintained the best.

**Table 1**

| No. | Thickness of thin metal plate | Thin metal plate | DCIR | Strength | Remarks |
|---|---|---|---|---|---|
| | | Stack number | | | |
| 1 | 0.2 T | 10 | 70 µΩ | 2.5 kN | Requirements for conductive |
| 2 | | 9 | 81 µΩ | 2.2 kN | connector in applied battery |
| 3 | | 8 | 93 µΩ | 1.5 kN | pack |
| | | | | | -DCIR: 100 µΩ or less |
| | | | | | -Strength: more than 1 kN |

By way of summation and review, if a battery pack is mechanically connected to a vehicle, it is important to configure the battery pack so as not to be affected by vibrations caused by impacts provided by the vehicle itself or outside the vehicle. For example, if a connection state of the interconnection portion to the battery module is vulnerable to vibration, stability of the electrical connection between battery modules may be reduced, thereby deteriorating performance of the battery pack.

In contrast, a battery pack according to embodiments includes a connector for electrically connecting a plurality of battery modules that is configured to minimize displacement due to vibration. That is, according to an embodiment, a connector that electrically connects a plurality of battery modules may basically function as a bus bar and may be correspondingly displaced if the battery modules are displaced by vibration. Accordingly, the connector may not deteriorate a connection state to the battery modules, and the battery pack may provide desired power to a necessary device (e.g., a vehicle) without deteriorating performance of the battery modules.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a first battery module (10) including first battery cells and a first bus bar (34') electrically connected to the first battery cells;
a second battery module (10') including second battery cells and a second bus bar (34') electrically connected to the second battery cells; and
a conductive connector (40) connected to the first bus bar and the second bus bar, the conductive connector including:
a first connection portion (400a) connected to the first bus bar,
a second connection portion (400b) connected to the second bus bar, and
a displacement portion (400c) between the first connection portion and the second connection portion, the displacement portion being moveable in each of X-axis, Y-axis, and Z-axis directions.

2. The battery pack as claimed in claim 1, wherein the displacement portion (400c) includes a flexible structure having a concave portion (4000c) and a convex portion (4002c) that are alternately positioned.

3. The battery pack as claimed in claim 1 or 2, wherein the conductive connector (40) has a bar shape, and each of the concave portion (4000c) and the convex portion (4002c) protrudes in a direction perpendicular to a longitudinal direction of the conductive connector.

4. The battery pack as claimed in any of the preceding claims, wherein the conductive connector (40) is formed as at least one thin metal plate, the concave portion (4000c) and the convex portion (4002c) protrude to opposite directions relative to the at least one metal plate.

5. The battery pack as claimed in claim 4, wherein the conductive connector (40) includes a plurality of thin metal plates.

6. The battery pack as claimed in claim 5, wherein the plurality of the thin metal plates (400) are stacked, a stack number of the plurality of the thin metal plate being eight to ten.

7. The battery pack as claimed in claim 5 or 6, wherein a thickness of each of the plurality of thin metal plates (400) is 0.2 mm.

8. The battery pack as claimed in any of claims 4 to 7, wherein the at least one thin metal plate includes aluminum.

9. The battery pack as claimed in any of the preceding claims, further comprising:
a first conductive damper (400d) connected between the first bus bar and the first connection portion; and
a second conductive damper (400e) connected between the second bus bar and the second connection portion.

10. The battery pack as claimed in claim 9, wherein the first conductive damper (400d) and the second conductive damper (400e) respectively have a first edge connected to the first bus bar and the second bus bar, and a second edge opposite to the first edge maintained as a free end.

11. The battery pack as claimed in claim 9 or 10, wherein the first conductive damper (400d) and the second conductive damper (400e) are respectively integrated with the first bus bar and the second bus bar.

12. The battery pack as claimed in any of claims 9 to 11, wherein the first connection portion (400a) and the second connection portion (400b) are respectively welded to the first conductive damper (400d) and the second conductive damper (400e).

13. The battery pack as claimed in any of the preceding claims, wherein the displacement portion (400c) is configured to be displaced according to a displacement of the first battery module and/or the second battery module.

14. The battery pack as claimed in any of the preceding claims, further comprising a frame (12) having a space accommodating the first battery module and the second battery module, the conductive connector being positioned outside the frame.
